# EUROPEAN PATENT SPECIFICATION

(11) **EP 1 136 055 B1**
(45) Date of publication and mention of the grant of the patent: **08.03.2006**
(21) Application number: 01106353.4
(22) Date of filing: 16.03.2001
(51) Int. Cl.: A61K 6/083, C08L 33/12

(54) **Tough denture and method for producing the same**
Widerstandsfähige Zahnprothese und Verfahren zu ihrer Herstellung
Prothèse dentaire à haute ténacité et son procédé de fabrication

(30) Priority: 22.03.2000 JP 2000126660
(43) Date of publication of application: 26.09.2001
(73) Proprietor: BMG INCORPORATED, Kyoto-shi, Kyoto-fu 601-8023 (JP)
(72) Inventor: Gen, Shokyu, Sakyo-ku, Kyoto 606-8507 (JP); Tsutsumi, Sadami, Sakyo-ku, Kyoto 606-8507 (JP); Kita, Toshio, Minami-ku, Kyoto 601-8023 (JP)
(74) Representative: Albrecht, Thomas

(56) References cited:
- EP-A- 0 411 512
- DE-B- 1 193 248
- US-A- 4 112 023
- US-A- 6 103 800
- DATABASE WPI Section Ch, Week 198032 Derwent Publications Ltd., London, GB; Class A14, AN 1980-56424C XP002269281 & SU 704 610 A (KHARK MED PLASTIC), 26 December 1979 (1979-12-26)
- DATABASE WPI Section Ch, Week 199218 Derwent Publications Ltd., London, GB; Class A96, AN 1992-147938 XP002269282 & JP 04 091007 A (CHUGOKU SHI-KEN KK), 24 March 1992 (1992-03-24)

## Description

### BACKGROUND OF THE INVENTION

### 1. Field of The Invention

The present invention relates to a tough denture fabricated of injectionable polymethyl-methacrylate (PMMA) and a method for producing the same. The denture according to the present invention includes partly or wholly artificial teeth and an artificial tooth base.

### 2. Description of Related Art

Dentures presently employed in clinical practice are made of heat-polymerized type PMMA, injection-type polysulfone (PS) and polycarbonate (PC) resins. The heat-polymerized type PMMA is fabricated of a mixture of methyl-methacrylate (MMA) monomer liquid and PMMA pre-polymer powder by mixing and heat-polymerizing in a denture-shaped mold. However, there are several product drawbacks in this method, namely, unstable shape caused by high shrinkage of polymer during polymerization, poor mechanical properties, such as impact resistance, and toxicity in the living organism that has been pointed out to cause an allergy by dissolving a lot of monomer residue after polymerization.

Because of the above drawbacks, PS and PC are employed as injectionable denture materials instead of the heat-polymerized type PMMA. However, PS shows poor impact resistance and PC shows toxicity and environmental pollution of bis-phenol A remained as monomer residue as well as poor adhesion to mending material of PMMA that is difficult to improve.

US 4,112,023 describes a denture comprising a high molecular weight PMMA powder, methal methacrylate copolymer powder, and 2-ethylhexyl acrylate.

DE 1 193 248 describes a molding composition for use in dentistry comprising syndiotactic and atactic PMMA.

Although it is desirable in the field of dental medicine to invent and apply a novel denture that shows excellent mechanical properties including impact resistance and contains only a small amount of monomer residues, there is still no PMMA denture to meet the above requirements.

The object of the present invention is to invent an excellent denture fabricated of PMMA and a method for its production, which denture contains only a small amount of monomer residue, including bis-phenol A, dissolving in the mouth and which shows excellent mechanical properties, including impact resistance.

### SUMMARY OF THE INVENTION

The present invention provides a denture obtainable by a process comprising mixing a red dyed fiber with pellets of a polymethyl-methacrylate (PMMA) and injecting said pellets into a denture mold, wherein said PMMA is composed of a blend of syndiotactic and atactic PMMAs which form a stereo complex, the blend ratio of these PMMAs is in the range of 40:60% to 60:40%, and the weight-average molecular weight of said PMMA is in the range of 100,000 to 300,000.

Furthermore, the invention provides a method for producing a denture comprising the steps of : (1) polymerizing a polymethyl-methacrylate (PMMA), (2) pelleting said PMMA, (3) mixing red dyed fiber with the pellets, (4) purifying the obtained pellets, (5) drying the pellets at a temperature in the range of 60 to 120°C for more than 4 hours in order to reduce the moisture content to less than 2%, and (6) injecting the dried pellets into a denture mold at a temperature in the range of 220 to 270°C to form a denture shape, wherein said PMMA is composed of a blend of syndiotactic and atactic PMMAs which form a stereo complex, the blend ratio of these PMMAs is in the range of 40:60% to 60:40% and the weight-average molecular weight of said PMMA is in the range of 100,000 to 300,000.

Also described herein is a tough denture and a method for its production, which denture comprises solid PMMA as a main component and, being added thereto, atacic polymethylmethacrylate or polar elastomer selected from the group consisting of polyacrylate rubber co-polymer, methylmethacrylate-alkylacrylate-styrene ter-polymer, and fluororubber, and which denture is fabricated in a process of being mixed and injected into a denture mold.

The term "toughness" in the present description means that tensile and Izod impact strengths are more than 75.0 MPa and 1.62 kg·cm/cm², respectively, and bending strain at 49.0 N (5.0 kgf) is less than 3.00 mm. Furthermore, the elution volume of monomer residue after PMMA polymerization is less than 3% in the denture according to the present invention.

### DETAILED DESCRIPTION OF THE INVENTION

The PMMA that is used in the present invention is a blend of syndiotactic and atactic PMMAs in order to improve mechanical and thermal properties by forming a stereo complex.

The higher the tacticity of the PMMA blend composed of the two PMMAs, the better. The tacticity is preferably more than 60%, more preferably more than 80%. The blend ratio of both PMMAs is in the range of 40 : 60% to 60 : 40% in order to form a stereo complex. The weight-average molecular weight of PMMA for the denture according to the present invention, in both cases, is in the range of 100,000 to 300,000, preferably in the range of 120,000 to 250,000. This is because a PMMA denture having a weight-average molecular weight of less than 100,000 shows poor mechanical properties in spite of the fact that it easily injects.

Although PMMA of high weight-average molecular weight is preferable in view of the mechanical properties, a uniformly shaped denture is difficult to fabricate from PMMA having a weight-average molecular weight of more than 300,000, because it is poorly fluidic and, thus, poorly injectionable as a result of high melt viscosity.

To the PMMA used in the present invention may be added a polar elastomer selected from the group consisting of polyacrylate rubber co-polymer, methylmethacrylate-alkylacrylate-styrene ter-polymer, and fluororubber in order to improve the mechanical properties, particularly toughness.

The polyacrylate rubber co-polymer is composed of alkyl acrylate ester and cross-linkable vinyl monomer. Here the alkyl acrylate ester includes methyl acrylate, ethyl acrylate, propyl acrylate, i-propyl acrylate, n-butyl acrylate, i-butyl acrylate, t-butyl acrylate, n-hexyl acrylate, octyl acrylate, 2-ethylhexyl acrylate, and lauryl acrylate. Especially, ethyl acrylate, n-butyl acrylate and 2-ethylhexyl acrylate are preferable because those compounds show low T_{g}'s of -22, -54 and -85°C, respectively, and, thus, good elasticity.

The cross-linkable vinyl monomer includes 2-chroloethyl-vinylether, acrylonitrile, glycidyl-methacrylate and acryl-glycidyl-ether. And the monomer is co-polymerized with the above alkyl acrylate ester at a weight ratio in the range of 5 to 20%.

The alkyl acrylate ester of the methylmethacrylate-alkylacrylate-styrene ter-polymer includes methyl acrylate, ethyl acrylate, propyl acrylate, i-propyl acrylate, n-butyl acrylate, i-butyl acrylate, t-butyl acrylate, n-hexyl acrylate, octyl acrylate, 2-ethylhexyl acrylate, and lauryl acrylate, the same as in the case of the co-polymer.

The fluororubber includes VDF-HFP, VDF-CTFE, PTFE-P, VDF-PFVE, TFE-PFVE, FVMQ, and VNF (as referred to in Asakura, "Plastic Encyclopedia", p. 509).

It is possible in the present invention to employ a wide range of mixture ratios of polar elastomer selected from the group consisting of polyacrylate rubber co-polymer, methyl-methacrylate-alkylacrylate-styrene ter-polymer and fluororubber, and PMMA. Preferable weight ratios of the elastomer to the PMMA are in the range of 2 to 30 wt.%, and more preferable ratios are in the range of 5 to 15 wt.%. This is because a denture having a mixture ratio of less than 2 wt.% or more than 30 wt.% shows relatively poor toughness or obstruction to PMMA properties.

The denture according to the present invention fabricated of injectionable PMMA is given a tone of similar color to capillaries and molds in oral mucous membrane by adding red dyed fibers; brown or yellowish white dyes, pigments or dyed fibers may also be added. Furthermore, it is possible to optionally add inorganic fillers such as calcium oxide, titanium oxide or hydroxyapatite. The dyed fibers include natural, chemical or synthetic fibers having heat-resistant properties; the fibers preferably show heat stability at injection temperatures in the range of 200 to 270 °C, easy dyeability and adhesion with PMMA. It is possible to choose cotton, rayon, polyacrylonitrile, nylon 66, polyimide and PVA as the above fiber.

The denture fabricated by injecting PMMA pellets cohered with red dyed fiber, looks similar in color to capillaries and molds in oral mucous membrane, because red dyed fiber uniformly disperses throughout the molded denture.

Preferable mixture ratios of the red dyed fiber to the PMMA pellets are in the range of 0.01 to 10 wt.%, and more preferable ratios are in the range of 0.1 to 0.5 wt.%. This is because a denture having mixture ratios of less than 0.01 wt.% or more than 10 wt.% show insufficient coloring or obstruction to PMMA properties. Preferable diameters and lengths of the fiber are in the ranges of 1 to 30 µm and 0.5 to 3 mm, respectively, and the injected denture fabricated of the above fiber looks similar in appearance to capillaries and molds in oral mucuous membrane, because of the uniform dispersing and maintaining of fiber shape after injection.

A method for producing the tough denture according to the present invention comprises the following steps:
- step 1: polymerizing the polymethyl-methacrylate,
- step 2: mixing polar elastomer selected from the group consisting of polyacrylate rubber co-polymer, methylmethacrylate-alkylacrylate-styrene ter-polymer, and fluororubber into the polymethylmethacrylate and pelleting,
- step 3: adding red dyed fibers and optionally adding brown or yellowish white dyes, pigments or dyed fibers, furthermore, optionally adding inorganic fillers such as calcium oxide, titanium oxide or hydroxyapatite,
- step 4: purifying the obtained pellets,
- step 5: drying the pellets at a temperature in the range of 60 to 120 °C for more than 4 hours in order to reduce the moisture content to less than 2%, and
- step 6: injecting the dried pellets into a denture-shaped mold at a temperature in the range of 220 to 270 °C.

As producing method of PMMA is possibly employed the ordinary method, for example, the method disclosed in JP-A-5/139925. The denture is usually produced according to the above described steps 2 to 5, but in injection step 6, deterioration of PMMA and fiber is prevented by not heating above an injection temperature of more than 270 °C.

The PMMA denture of the present invention is possibly given antibacterial properties by adding inorganic antibacterial agent.

In conclusion, the PMMA denture according to the present invention shows improved safety to the living organism and productivity of molding because of its excellent mechanical properties and remarkable elution volume decrease after polymerization in comparison with ordinary type dentures of heat-polymerized PMMA. Furthermore, it is possible to widely apply it to clinical use because of its good oral adaptability and economical advantage.

### EXAMPLES

The following "examples" do not form part of the invention but represent background art which will nevertheless facilitate the practice of the invention.

Mechanical properties and the eluted volume of dissolved monomer residue for the injection molded castings of examples 1 to 7 and comparative examples 1 and 2 are measured according to ASTM and weight decrease of the castings after immersion in methanol and stirring for 3 days at 50 °C.

Tables 1 and 3 show the tensile strength, Izod impact strength and bending strain. Tables 2 and 4 show the eluted volumes according to the above described method.

### Example 1

Pellets of syndiotactic and atactic PMMA having weight-average molecular weights of about 220,000 and 280,000 are mixed with each other at a ratio of 50 by 50 wt.%, molded in a plaster mold by injector, and fabricated to obtain castings.

### Example 2

A polymer blend composed of syndiotactic PMMA (90 wt.%) having a weight-average molecular weight of 120,000 and n-butyl acrylate (10 wt.%) is made into pellets, molded in a plaster mold by injector, and fabricated to obtain castings.

### Example 3

Syndiotactic PMMA pellets having a weight-average molecular weight of 120,000 are cohered with red dyed cellulose fiber (0.2 wt.%), molded in a plaster mold by injector, and fabricated to obtain castings.

### Comparative Example 1

Methylmethacrylate (50 wt.%) is mixed with PMMA powder (50 wt.%) having a weight-average molecular weight of 460,000, made into a paste, molded in a plaster mold, and fabricated to obtain castings.

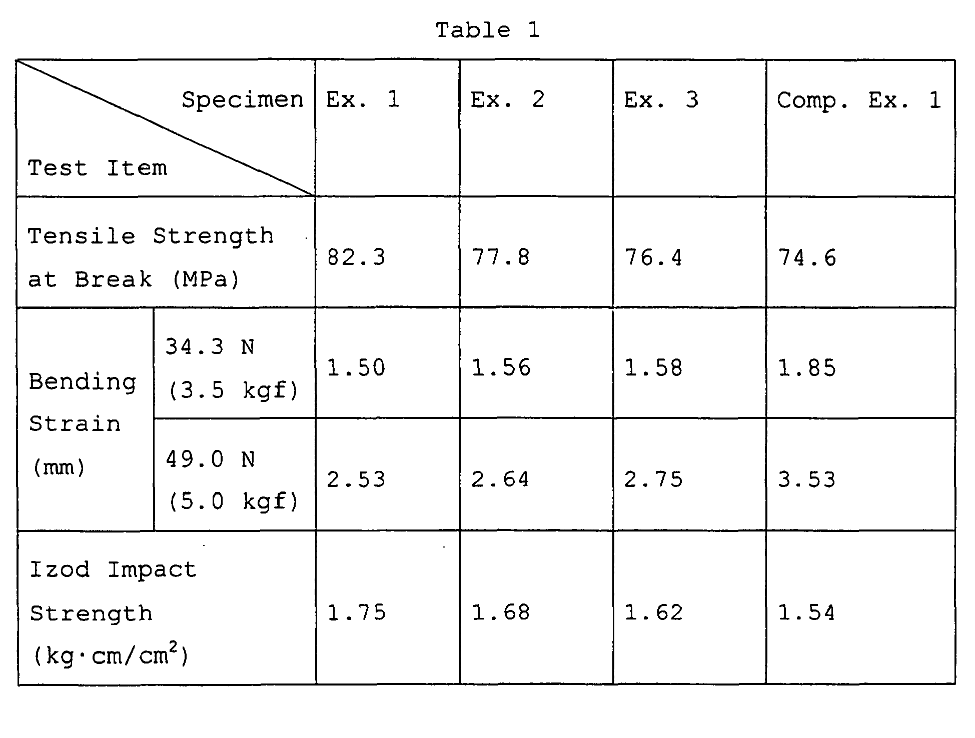

**Table 2**

| Specimen | eluted volume (%)* |
|---|---|
| Example 1 | 1.96 ± 0.64 |
| Example 2 | 1.78 ± 0.72 |
| Example 3 | 1.82 ± 0.60 |
| Comparative Example 1 | 8.05 ± 0.96 |

| | |
|---|---|
| *average ± standard variation (n=3) | |

### Example 4

A polymer blend composed of syndiotactic PMMA (90 wt.%) having a weight-average molecular weight of 120,000 and n-butyl acrylate (10 wt.%) is cohered by legal pigment of Brown No. 201 (fabricated by Kiki Kasei Ltd.) in a ratio of 0.1 parts per 100 parts of the polymer, molded in a plaster mold by injector, and fabricated to obtain castings.

### Example 5

A polymer blend composed of syndiotactic PMMA (90 wt.%) having a weight-average molecular weight of 120,000 and n-butyl acrylate (10 wt.%) is cohered by legal pigment of Yellow No. 205 (fabricated by Kiki Kasei Ltd.) in a ratio of 0.1 parts per 100 parts of the polymer, molded in a plaster mold by injector, and fabricated to obtain castings.

### Example 6

A polymer blend composed of syndiotactic PMMA (90 wt.%) having a weight-average molecular weight of 120,000 and n-butyl acrylate (10 wt.%) is cohered by a mixture composed of 100 parts of the polymer, 0.1 parts of the above mentioned Brown pigment No. 201 and 0.4 parts of tribasic calcium phosphate (Wako Ltd.), molded in a plaster mold by injector, and fabricated to obtain castings.

### Example 7

A polymer blend composed of syndiotactic PMMA (90 wt.%) having a weight-average molecular weight of 120,000 and n-butyl acrylate (10 wt.%) is cohered by a mixture composed of 100 parts of the polymer, 0.1 parts of above mentioned Yellow pigment No. 201 and 0.3 parts of Anatase form titanium dioxide (Wako Ltd.), molded in a plaster mold by injector, and fabricated to obtain castings.

### Comparative Example 2

A polymer blend composed of syndiotactic PMMA (99.9 wt.%) having a weight-average molecular weight of 120,000 and n-butyl acrylate (0.1 wt.%) is made into pellets, molded in a plaster mold by injector, and fabricated to obtain castings.

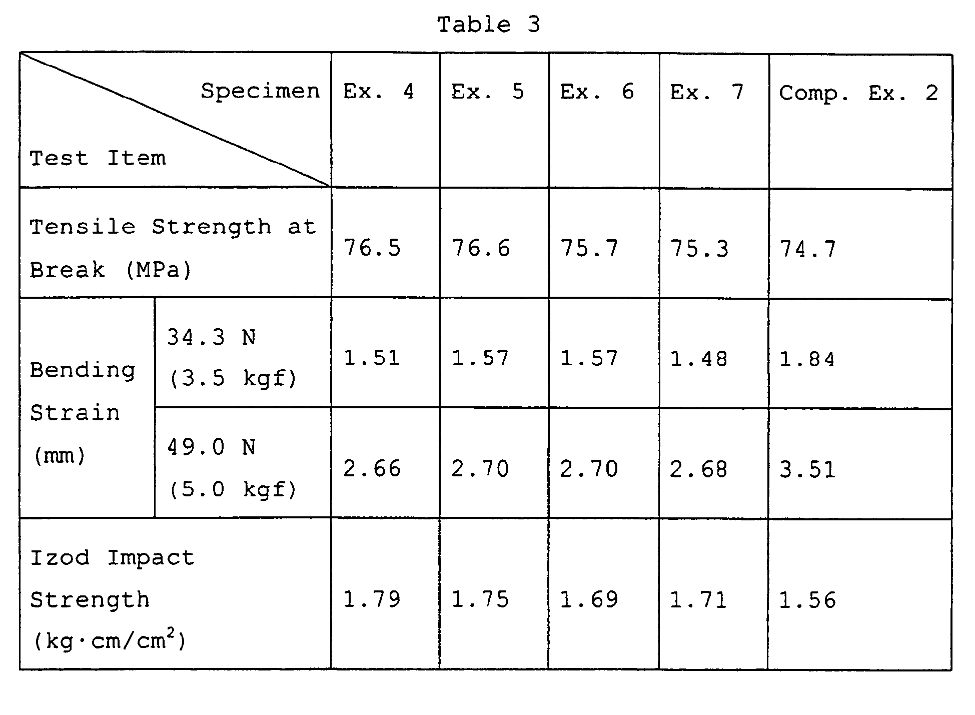

**Table 4**

| Specimen | eluted volume (%)* |
|---|---|
| Example 4 | 1.80 ± 0.52 |
| Example 5 | 1.90 ± 0.77 |
| Example 6 | 1.78 ± 0.74 |
| Example 7 | 1.81 ± 0.63 |
| Comparative Example 2 | 1.82 ± 0.74 |

| | |
|---|---|
| *average ± standard variation (n=3) | |

## Claims

1. A denture obtainable by a process comprising mixing a red dyed fiber with pellets of a polymethyl-methacrylate (PMMA) and injecting said pellets into a denture mold,
wherein said PMMA is composed of a blend of syndiotactic and atactic PMMAs which form a stereo complex,
the blend ratio of these PMMAs is in the range of 40:60% to 60:40%, and
the weight-average molecular weight of said PMMA is in the range of 100,000 to 300,000.

2. A method for producing a denture comprising the steps of:
(1) polymerizing a polymethyl-methacrylate (PMMA),
(2) pelleting said PMMA,
(3) mixing red dyed fiber with the pellets,
(4) purifying the obtained pellets,
(5) drying the pellets at a temperature in the range of 60 to 120°C for more than 4 hours in order to reduce the moisture content to less than 2%, and
(6) injecting the dried pellets into a denture mold at a temperature in the range of 220 to 270°C to form a denture shape,
wherein said PMMA is composed of a blend of syndiotactic and atactic PMMAs which form a stereo complex,
the blend ratio of these PMMAs is in the range of 40:60% to 60:40% and
the weight-average molecular weight of said PMMA is in the range of 100,000 to 300,000.

## Patentansprüche

1. Zahnprothese, erhältlich durch ein Verfahren, umfassend das Vermischen einer rot gefärbten Faser mit Pellets eines Polymethylmethacrylats (PMMA) und Einspritzen der Pellets in eine Zahnprothesenform,
wobei das PMMA aus einem Gemisch syndiotaktischer und a-taktischer PMMAs besteht, die einen Stereokomplex bilden,
das Mischungsverhältnis dieser PMMAs im Bereich von 40:60% bis 60:40% liegt und
das gewichtsmittlere Molekulargewicht des PMMA im Bereich von 100.000 bis 300.000 liegt.

2. Verfahren zur Herstellung einer Zahnprothese, das die folgenden Stufen umfasst:
(1) Polymerisieren eines Polymethylmethacrylats (PMMA),
(2) Pelletieren des PMMA,
(3) Vermischen einer rot gefärbten Faser mit den Pellets,
(4) Reinigen der erhaltenen Pellets,
(5) Trocknen der Pellets bei einer Temperatur im Bereich von 60-120°C für mehr als vier Stunden, um den Feuchtigkeitsgehalt auf weniger als 2% zu verringern, und
(6) Einspritzen der getrockneten Pellets in eine Zahnprothesenform bei einer Temperatur im Bereich von 220 bis 270°C um ein Zahnprothesenformteil zu bilden,
wobei das PMMA aus einem Gemisch syndiotaktischer und a-taktischer PMMAs besteht, die einen Stereokomplex bilden,
das Mischungsverhältnis dieser PMMAs im Bereich von 40:60% bis 60:40% liegt und
das gewichtsmittlere Molekulargewicht des PMMA im Bereich von 100.000 bis 300.000 liegt.

## Revendications

1. Prothèse dentaire pouvant être obtenue par un procédé comprenant le mélange d'une fibre teinte en rouge avec des granulés d'un polyméthacrylate de méthyle (PMMA) et l'injection desdits granulés dans un moule de prothèse dentaire,
dans laquelle ledit PMMA se compose d'un mélange de PMMA syndiotactique et de PMMA atactique qui forment un complexe stéréo,
le ratio du mélange de ces PMMA se situe dans la plage de 40:60% à 60:40%, et
la masse moléculaire moyenne en poids dudit PMMA se situe dans la plage de 100 000 à 300 000.

2. Procédé de production d'une prothèse dentaire, comprenant les étapes consistant à :
(1) polymériser un polyméthacrylate de méthyle (PMMA),
(2) granuler ledit PMMA,
(3) mélanger une fibre teinte en rouge avec les granulés,
(4) purifier les granulés obtenus,
(5) sécher les granulés à une température dans la plage de 60 à 120°C pendant plus de 4 heures afin de réduire la teneur en humidité à moins de 2%, et
(6) injecter les granulés séchés dans un moule de prothèse dentaire à une température dans la plage de 220 à 270°C afin de former une forme de prothèse dentaire,
dans lequel ledit PMMA se compose d'un mélange de PMMA syndiotactique et de PMMA atactique qui forment un complexe stéréo,
le ratio du mélange de ces PMMA se situe dans la plage de 40:60% à 60:40%, et
la masse moléculaire moyenne en poids dudit PMMA se situe dans la plage de 100 000 à 300 000.
